# EUROPEAN PATENT SPECIFICATION

(11) **EP 0 434 655 B1**
(45) Date of publication and mention of the grant of the patent: **18.01.1995**
(21) Application number: 90870221.0
(22) Date of filing: 20.11.1990
(51) Int. Cl.: B65D 41/58

(54) **Reusable sealing-closure system for a container**
Wiederverwendbares System von Verschluss und Dichtung für einen Behälter
Système de fermeture et d'étanchéité réutilisable pour un récipient

(30) Priority: 22.11.1989 GB 8926409
(43) Date of publication of application: 26.06.1991
(73) Proprietor: MONSANTO EUROPE S.A., B-1150 Brussels (BE)
(72) Inventor: Moens, Luc, B-2510 Mortsel (BE); Bellemans, Jacques, B-2180 Kalmthout (BE); Verheyen, Willy, B-2600 Berchem-Antwerpen (BE)
(74) Representative: Bosch, Henry

(56) References cited:
- EP-A- 0 261 047
- GB-A- 2 053 864

## Description

This invention relates to a sealing and closure system for a container, and particularly to a reusable, combined sealing-closure system for a container.

To avoid unintentional escape of the contents from a container, two major, generally known systems are in use already for many years, i. e.:
- a sealing system comprising a plug which is inserted into an opening on the container, and
- a closure system comprising a cap which is put over the opening.

It is well known that a sealing system comprising only a plug may suffer from several disadvantages such as, for example,
- the fact that the plug may not remain in place due to the build-up of an overpressure inside the container, or
- the fact that the plug may admit leakage as a result of an insufficient frictional sealing effect, or
- the fact that the plug may not be reusable or ensure adequate sealing when reused, due to damage caused to the plug or to the container at the first removal of the plug.

A simple, slightly improved system, in use for years, concerns a plug with an outer thread which fits in an opening with an inner thread. This system is further improved by addition of an annular flange extending radially outward from the upper part of the plug to fully cover the opening, and optionally by further addition of a sealing ring which provides for additional sealing between the opening and said annular flange when the plug is fully screwed into the opening.

The closure system using simply a cap, which is very often a screw cap having an inner thread to be fitted on an opening with a neck having an outer thread, is also known to show possibly imperfect sealing as a result of unsufficient frictional sealing contact between the neck and the cap.

A slightly improved system, widely in use, concerns a cap, and in particular a screw cap, to which a sealing ring is added to provide for sealing between the top of the neck and the cap when the latter is put fully in place on the neck.

However, both improved systems are still susceptible of malfunctioning as a result of, for example,
- permanent deformation of the sealing ring as a result of forces exercised by screwing the cap on, or the plug in the opening,
- damage of the sealing ring caused by its removal from the opening,
- easy loosening and getting lost of the sealing ring when the cap or plug is removed from the container.

In order to overcome the disadvantages of said closures more sophisticated sealing and closure systems have been developed, in which it was tried to combine one or more advantageous features of both basic systems.

US-A-3.788.510 discloses a closure system which comprises an insert assembled with a screw cap and which is constructed to deform when the cap is screwed down on the neck of a container to conform the parts of the insert into leak-proof relation with the neck.

US-A-4.140.235 discloses a closure arrangement comprising a tubular body which is press-fitted in the neck of a container and having means to ensure a tight seal against the inner wall of the neck, and at its inner side having a thread which fits with the second part of the closure arrangement which comprises a stopper-like body with an exterior screw thread and, at its upper part, a flange and a grip to facilitate handling.

US-A-4.573.605 discloses a closure arrangement comprising
- a closure plug including a cylindrical skirt with external threads and a covering annular flange extending radially outward from the upper portion of the skirt, and
- a closure device including a cylindrical skirt with (i) external threads to fit with the internal threads of the container neck, and with (ii) internal threads to fit with the external threads of said closure plug, and with (iii) an annular upper flange extending radially outward from the upper part of the skirt.

GB-A-2 053 864 discloses a sealing-closure system for a container having an opening in the form of a neck, comprising a cap connected to a plug to be inserted in said opening when the cap is put in place on the opening wherein
- the cap and plug have means provided with connections means which by mutual interaction ensure a loose, captive connection of the cap with the plug,
- the plug comprises a tubular part connected to a bottom part from which projects the means having connection means,
- the means of the plug ensuring the connection with the cap comprise a skirt projecting from the bottom of the plug at the side opposite to the side facing the content of the container, provided with connection means which are a rib system.

In the search for improved sealing and closure systems for containers a new and improved, combined sealing-closure system has been developed.

The present invention, described in detail hereinafter, relates to this new sealing-closure system which combines advantages of both a cap-closure system and a plug-sealing system.

The invention relates to sealing-closure system for a container having an opening in the form of a neck, comprising a cap connected to a plug to be inserted in said opening when the cap is put in place on the opening, the cap having a cap skirt or two or more cap stems projecting from the inner side of the cap, provided with cap abutting means, the plug comprising a substantially tubular part with a conical part, connected to a bottom part and being provided with plug abbuting means at a side opposite to the side facing the content of the container, said cap abutting means and plug abutting means by mutual interaction ensuring a loose, captive connection of the cap with the plug and a longitudinally free movement along the axis of the tubular part of the plug, wherein the cap and/or the plug is provided with a wedge-shaped part which either forms part of the cap skirt or cap stems, or forms part of the substantially tubular part of the plug, or which comprises an additional cap skirt or set of two or more cap stems, said wedge-shaped part being constructed so as to effect pressure on the inner wall of tubular part of the plug, ensuring excellent sealing of the neck of the container when the cap is fully put in place on the neck of the container.

It should be noticed that EP-A-0 379 823 filed before the priority date of the present patent application and published thereafter discloses a two-piece closure comprising a stopper having a bowl-like shape consisting of resilient material, and a cap with an internal skirt. The stopper is arranged with its skirt on said internal skirt of the cap. Both skirts have annular embossings which are opposite to one another when the stopper is ratched in the cap. According to this document, the stopper and cap are arranged in such a way that the end of the stopper skirt is pressed against the cap bottom and that both the stopper and the cap are drawn simultaneously off the bottle, thus not allowing a longitudinally loose captive connection between cap and stopper.

An advantage of the sealing closure system of the invention is that the plug is pulled out from the opening in form of a neck by movement, e.g. pulling of the cap away from the opening. The cap and, the plug remain loosely held together when removed from the opening.

An other advantage is that the sealing closure system is reusable.

Further, it will appear from the following description of preferred embodiments that all the advantages of known cap-closure systems and plug sealing systems are still present.

Examples of a sealing-closure system according to the invention will now be described with reference to the accompanying drawings, in which :
Figure 1 represents a cross-section of a sealing-closure system put in place on an opening of a container in the form of a neck, which comprises a separate wedge-shaped skirt and means connecting the cap with the plug.
Figure 2 represents a cross-section of a sealing-closure system put in place on an opening of a container in the form of a neck which comprises means connecting the cap with the plug having a wedge-shaped form.

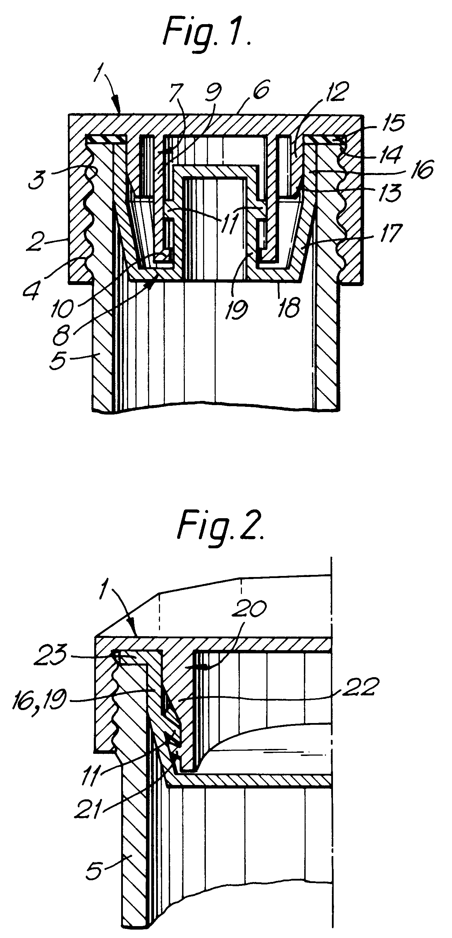

As shown in figure 1, the sealing-closure system has a cap (1) which comprises a substantially tubular skirt (2) with an inner thread (3) which fits well with the thread of the outer surface (4) of the neck (5) of a container, with on top a full flange (6) from which projects the means (7) which ensure the captive connection of the cap (1) with the plug (8). The means (7) comprise a cylindrical skirt (9) provided with abutting means (10) which in interaction with their counterpart (11) from the plug ensure the said captive connection.

The cap further has a wedge-shaped skirt (12) with a conical end (13). A rib (14) which holds a sealing ring (15) in place may optionally be present also.

The plug (8) comprises a substantially tubular part (16) with a conical part (17) connected to the bottom part (18) from which at the side opposite to the side facing the contents of the container project the means (19), having abutting means (11), which in interaction with their counter part (10) of the cap ensure the captive connection between the cap and the plug.

Whereas in a preferred embodiment the cap is a screw-cap, the cap may also be constructed to be press-fitted.

The substantially tubular skirt (2) is constructed in accordance with the fitting system and is constructed to fit well with the outer wall of the neck, as known per se.

When the cap is constructed to be press-fitted onto a neck the inner wall of the substantially tubular skirt and the outer wall of the neck may be provided with additional means to ensure that the cap when put in place on the neck, is firmly kept in place. Such means are for example a rib on the cap in combination with a corresponding groove or rib on the plug.

In case the cap is constructed to be screw-fitted the inner wall of the substantially tubular skirt and the facing outer wall of the neck have both threads (3) and (4) which ensure that the cap is firmly kept in place when it is screwed down on the neck.

The full flange (6) on top of the substantially tubular skirt (2) can be flat or curved at the outer side and optionally may, alone or together with the outer surface of the tubular skirt, have means known per se which ensure a good grip in order to facilitate putting in place and removal of the cap, such as, for example, a rough surface or an adequately designed outer shape.

The flange and the said substantially tubular skirt form together a cup-like cap from the bottom of which project the means (7) which ensure the connection of the cap to the plug. Preferably the means (7) have the form of a tubular skirt. Instead of a full skirt, the means (7) may also comprise a set of two or more stems which project from the bottom of the cap. The means (7), either skirt or stems are provided with abutting means (10) which ensure loose connection with their counterpart of the plug. The abutting means can be a rib or hook or barb system and can be located at the end or at any place along the length of that part and are constructed so that they will interact with their counterpart from the plug.

The means (7) and (10) are made sufficiently robust so as to resist to the forces applied when the cap is put in place or removed away from the neck while respectively inserting or removing the plug.

The means (7) ensuring the connection with the plug, are dimensioned so that when the cap is put in place on the neck, they will effect a pressure directly or indirectly on the bottom of the plug so as to insert the plug into the neck and to enable on the one hand complete insertion of the plug in the neck and on the other hand complete seating of the cap on the neck.

In a preferred embodiment the means (7) may be dimensioned in such way that they do not reach the bottom of the plug. In this preferred embodiment the plug is inserted in the neck by pressure effected on the plug by the cup-side of the cap when the cap is put in place on the neck.

The wedge-shaped skirt (12) is dimensioned in accordance with the dimensions of the plug and is constructed in such way that when the cap is fully put in place on the neck the wedge will effect a pressure on the inner wall of the plug so ensuring an excellent sealing of the outer wall of the plug with the facing inner wall of the neck.

A particular embodiment of the invention may comprise instead of the two skirts (7) and (12) respectively, one wedge-shaped skirt (12) and means (7) in the form of a set of stems.

In another particular embodiment of the invention the parts (7) and (12) shown in figure (1) are combined so as to form means which at the same time can act as means (20) having abutting means (21) and a wedge shaped part (22), as shown in Figure 2.
In another particular embodiment the inner skirt (12) has simply a tubular form without a wedge-shaped form or -part and optionally is provided with a conical end (13). In still another particular embodiment the inner skirt (12) may even be absent.

In a preferred embodiment the cap is a screw cap, comprising a wedge-shaped inner skirt which can ensure the pressing effect on the inner wall of the plug, and a second skirt with a rib, hook or barb system which can ensure the captive connection with the plug and also can ensure insertion and removal of the plug when the cap is, respectively, put in place or removed from the neck.

Optionally the cap can further comprise security means which are such that they guarantee that when the cap is loosened or removed for the first time the security device is irreversibly broken.

The plug (8) of the sealing-closure system according to the invention comprises a substantially tubular part (16), a bottom part (18) and means (19).

The tubular part (16) is constructed in such way that it fits very well with the facing surface of the neck, when inserted in the neck.

In a particular embodiment the substantially tubular part (16) may be provided, at its side opposite the inner side of the neck of the container, in a manner known per se with a rib or a wedge-shaped part which is constructed so as to effect pressure on the inner tubular wall of the plug, ensuring excellent sealing of the neck of the container when the cap is fully put in place on the neck of the container.

The bottom part (18) may be a flat or curved, full flange which is firmly and leak-proof connected to said tubular part so that in combination with the latter a plug is formed, which when inserted in the neck ensures adequate, leak-proof sealing of the content of the container.

To facilitate the insertion of the plug into the neck, the lower end of the tubular part which is connected to the bottom part of the plug, may have, in a preferred embodiment, a conical part (17) with a diameter which is smaller than the diameter of the neck.

The means (19) may be formed by a part of the bottom of the plug or by a skirt or a set of two or more stems projecting from said bottom at the side which is opposite to the side facing the content of the container.

The means (19) further comprise abutting means (11) comprising a rib, hook or barb system which in interaction with their counterpart from the cap ensure the loose, captive connection between the plug and the cap.

The means (19) may also form part of the substantially tubular part (16) with which they are combined and from the inner side of which projects the abutting means (11) as shown in Figure 2.

The means and the connection means of the plug and the cap are dimensioned in such way that they ensure, when the plug and cap component of the sealing-closure system of the invention are interconnected to each other, a loose connection and allow for a sliding and possibly a rotational movement of both components with respect to each other.

The means and the hook, rib or barb systems of the cap and the plug may be constructed either as a continuous part or as a discontinuous part, e.g. means in the form of a set of stems, or as a combination of a continuous part with a discontinuous part, provided that when the means or the hook, rib or barb systems are constructed as a discontinuous part, the design of the cap and plug is such that correct positioning of the hook, rib or barb systems of the plug and the cap is maintained during said sliding and possibly rotational movements so as to ensure their interaction and the captive, loose connection between the plug and the cap.

In a preferred embodiment of the invention the sealing-closure system comprises a sealing ring (15) which provides for additional sealing of the content of the container. This sealing ring covers the top of the tubular part of the plug and the top of the neck and fits in between the wedge-shaped skirt (12) and the inner wall of the outer tubular skirt of the cap.

In a more preferred embodiment the design of the cap is such that the sealing ring is captively connected to the cap, for example, by a rib (14) or a winding of the thread at the inner side of the skirt of the cap, which holds captively the sealing ring in place.

Instead of a separate sealing ring (15) a similarly additional sealing effect may be realised, in another preferred embodiment of the invention, by an annular flange part (23) of the substantially tubular part (16) of the plug, extending outward from the upper part of the latter to cover the top of the neck, as shown in Figure 2.

The means and connection means of the plug and cap may be dimensioned in such way that the removal of the plug from the neck is easily performed by pulling the cap away from the container after it has disengaged from the neck.

In a particular embodiment comprising a screw-cap the said means and abutting means may be dimensioned so that the plug is smoothly and easily removed from the container by unscrewing of the cap.

In another particular embodiment unsealing requires a two-stage operation comprising (i) removing the screw-cap from the neck and (ii) pulling the cap away from the neck so as to pull the plug out of the neck. This two-stage operation has certain safety advantages since inadvertent opening is less likely.

The cap and the plug as well as each of the parts and means they comprise may be manufactured from the same material or from one or more different materials which are chosen amongst available materials which are adequate for the manufacture of caps and plugs. Such materials may be for example metallic materials and metallic alloys with or without a protective coating, or suitable plastic materials.

The materials the plug and the optional sealing ring are made from, and in a preferred embodiment also the one or the ones the cap is made from, have to be compatible with the content of the container. This means that these materials are selected by the person skilled in the art on the basis of the known physico-chemical properties of the materials to be used for the manufacture of the plug, sealing ring and the cap, on one hand, and on the other hand on the basis of the known physico-chemical properties of the content of the container, so that the plug is not physically and/or chemically attacked by the content of the container. Optionally the plug can be coated at the surfaces which may come in contact with the content of the container with a material so as to enhance or ensure its non-reactivity with the content of the container and its leak-proof character against liquids, vapours and gases.

Suitable materials for the manufacture of the closure system may be appropriately chosen from the group comprising metals, such as iron, brass and copper, metal alloys, thermoplastic materials such as homo-polymers, copolymers and grafted polymers and copolymers which are of common use in the art.

Particularly suitable plastic materials are, for example, polyethylene, high-density polyethylene, low-density polyethylene, linear low-density polyethylene, polypropylene, and the like.

Suitable materials for the sealing ring are for example, natural rubber, ethylene-propylene rubber, butadiene rubber, B-S rubbers, A-B-S rubbers, silicone based rubbers and the like.

The plug and cap, respectively, are preferably manufactured in one part by moulding, and particularly by injection moulding.

In a preferred embodiment the cap is manufactured from polyethylene, e.g. high-density polyethylene, or polypropylene and the plug from polyethylene, such as e.g. low-density polyethylene and linear low-density polyethylene.

The construction of the plug and the cap is such that it provides for an easy assembly of both components simply by appropriate press-fitting of both components.

The plug-cap closure can be pre-assembled before it is used to seal for the first time a container neck or it can be assembled after filling and preliminary sealing of the can by insertion of the plug component from the closure system in the neck, by putting the cap in place on the neck, as a result of which operation the cap and plug become captively connected.

The sealing-closure system of the invention has considerable advantages over known sealing and closure systems, which comprise:
- easy manufacture and easy assembly of the plug and cap components,
- possibility to chose the materials for the manufacture of the cap and plug from a wide group of adequate available materials,
- providing a leak-proof, combined sealing and closure system for containers having a neck,
- ensuring that the plug is kept in place in the neck by having the cap in place on the neck,
- avoiding difficulties to insert and to remove the plug,
- avoiding damaging of the neck and the plug at the removal of the plug,
- avoiding, in particular in the embodiment wherein the plug is smoothly and easily removed by unscrewing of the cap, that a liquid content splashes out of the container when the plug is removed,
- introduction of safety advantages particularly in the embodiment wherein unsealing is performed in a two-stage operation,
- avoid that the main sealing part of the closure system, i.e. the plug, gets lost easily, because it remains captively connected to the cap on removal of the latter,
- the fact that the sealing-closure system is reusable while still ensuring leak-proof sealing of the container content.

The sealing-closure system according to the invention may be useful in applications where the content of the container is a gas, a vapour, a liquid, a solid or a combination of one or more of these.

In a preferred embodiment the sealing-closure system of the invention is used to leak-proof seal and close containers containing chemicals and in particular pesticides, insecticides, herbicides and fungicides, corrosive or poisonous liquids or liquids dangerous to the environment.

## Claims

1. A sealing-closure system for a container having an opening in the form of a neck, comprising a cap (1) connected to a plug (8) to be inserted in said opening when the cap is put in place on the opening, the cap (1) having a cap skirt (9) or two or more cap stems projecting from the inner side of the cap (1), provided with cap abutting means (10, 21), the plug (8) comprising a substantially tubular part (16) with a conical part (17), connected to a bottom part (18) and being provided with plug abutting means at a side opposite to the side facing the content of the container, said cap abutting means and plug abutting means by mutual interaction ensuring a loose, captive connection of the cap (1) with the plug (8) and a longitudinally free movement along the axis of the tubular part of the plug, characterised in that the cap (1) and/or the plug (8) is provided with a wedge-shaped part (12; 22), which either forms part of the cap skirt or cap stems (20), or forms part of the substantially tubular part of the plug (8), or which comprises an additional cap skirt (12) or set of two or more cap stems, said wedge-shaped part being constructed so as to effect pressure on the inner wall of tubular part of the plug, ensuring excellent sealing of the neck of the container when the cap is fully put in place on the neck of the container.

2. A sealing closure system according to claim 1, wherein the plug abutting means are arranged on a plug skirt (19) or two or more plug stems projecting from the bottom of the plug (8), at a side opposite to the side facing the content of the container.

3. A sealing closure system according to claim 1, wherein the plug abutting means are arranged on the substantially tubular part (16) of the plug.

4. A sealing closure system according to claim 1 wherein the cap abutting means and plug abutting means consist in a hook, rib or barb system.

5. Sealing-closure system according to any of Claims 1 to 4, wherein the cap is a screw cap with an inner thread (9) and optionally has means which ensure a good grip to facilitate screwing and unscrewing.

6. Sealing-closure system according to any of Claims 1 to 5, wherein the cap skirt or cap stems and/or the cap abutting means are constructed so as to effect a pressure directly or indirectly on the bottom of the plug (8) by which effect the plug is inserted into the neck of the container, when the cap (1) is put in place on the neck.

7. Sealing-closure system according to any of Claims 1 to 6, wherein the cap (1) comprises an additional sealing ring (15) located between the inner thread and the wedge part or wherein the tubular part (16) of the plug (8) has an annular flange part (23), which, when the cap (1) is fully put in place on the neck of the container, ensures additional sealing.

8. Sealing-closure system according to Claim 1 wherein the cap is further equipped with security means which are irreversibly broken when the cap is loosened or removed for the first time from the neck of the container.

## Patentansprüche

1. Dichtungs-Verschluß-System für einen Behälter mit halsförmiger Öffnung, mit einer Kappe (1), die mit einem Stopfen (8) verbunden ist, der in diese Öffnung eingeführt wird, wenn die Kappe auf der Öffnung placiert wird, wobei die Kappe (1) einen Kappensaum (9) oder zwei oder mehrere Kappenstege aufweist, der bzw. die von der Innenseite der Kappe (1) absteht bzw. abstehen und mit Kappenanschlagmitteln (10, 21) versehen ist bzw. sind, wobei der Stopfen (8) einen im wesentlichen rohrförmigen Teil (16) mit einem konischen Teil (17) aufweist, welcher mit einem Bodenteil (18) verbunden ist und mit Stopfenanschlagmitteln an einer Seite versehen ist, die der dem Inhalt des Behälters zugewandten Seite gegenüberliegt, wobei die Kappenanschlagmittel und die Stopfenanschlagmittel durch gegenseitiges Zusammenwirken eine lose, festhaltende Verbindung der Kappe (1) mit dem Stopfen (8) und eine freie Längsbewegung entlang der Achse des rohrförmigen Teils des Stopfens gewährleisten, dadurch gekennzeichnet, daß die Kappe (1) und/oder der Stopfen (8) mit einem keilförmigen Teil (12, 22) versehen ist, welcher entweder einen Teil des Kappensaumes oder der Kappenstege (20) bildet oder einen Teil des im wesentlichen rohrförmigen Teils des Stopfens (8) bildet, oder welcher einen zusätzlichen Kappensaum (12) oder einen Satz von zwei oder mehreren Kappenstegen aufweist, wobei der keilförmige Teil so konstruiert ist, daß er auf die Innenwand des rohrförmigen Teils des Stopfens einen Druck ausübt und eine ausgezeichnete Abdichtung des Halses des Behälters gewährleistet, wenn die Kappe vollständig auf dem Hals des Behälters placiert ist.

2. Dichtungs-Verschluß-System nach Anspruch 1, worin die Stopfenanschlagmittel an einem Stopfensaum (19) oder zwei oder mehreren Stopfenstegen angeordnet sind, der bzw. die vom Boden des Stopfens (8) absteht bzw. abstehen, und zwar an einer Seite, die der dem Inhalt des Behälters zugewandten Seite gegenüberliegt.

3. Dichtungs-Verschluß-System nach Anspruch 1, worin die Stopfenanschlagmittel auf einem im wesentlichen rohrförmigen Teil (16) des Stopfens angeordnet sind.

4. Dichtungs-Verschluß-System nach Anspruch 1, worin die Kappenanschlagmittel und die Stopfenanschlagmittel aus einem Haken-, Rippen- oder Widerhakensystem bestehen.

5. Dichtungs-Verschluß-System nach einem der Ansprüche 1 bis 4, worin die Kappe eine Schraubkappe mit einem Innengewinde (9) ist und gegebenenfalls Mittel aufweist, welche einen guten Griff zur Erleichterung des Zu- und Aufschraubens gewährleisten.

6. Dichtungs-Verschluß-System nach einem der Ansprüche 1 bis 5, worin der Kappensaum oder die Kappenstege und/oder die Kappenaschlagmittel so konstruiert sind, daß sie einen direkten oder indirekten Druck auf den Boden des Stopfens (8) bewirken, durch welche Wirkung der Stopfen in den Hals des Behälters eingefügt wird, wenn die Kappe (1) auf dem Hals placiert wird.

7. Dichtungs-Verschluß-System nach einem der Ansprüche 1 bis 6, worin die Kappe (1) einen zusätzlichen Dichtring (15) aufweist, welcher sich zwischen dem Innengewinde und dem Keilteil befindet, oder worin der rohrförmige Teil (16) des Stopfens (8) einen ringförmigen Flanschteil (23) aufweist, welcher, wenn die Kappe (1) vollständig auf dem Hals des Behälters placiert ist, eine zusätzliche Abdichtung gewährleistet.

8. Dichtungs-Verschluß-System nach Anspruch 1, worin die Kappe weiter mit Sicherheitsmitteln ausgestattet ist, die irreversibel zerbrochen werden, wenn die Kappe gelockert oder zum ersten Mal vom Hals des Behälters entfernt wird.

## Revendications

1. Système de fermeture et étanchéité destiné à un récipient ayant une ouverture en forme de goulot, qui comprend une capsule (1) reliée à un bouchon (8) qui va être introduit dans ladite ouverture quand la capsule est mise en place sur l'ouverture, la capsule (1) comprenant une jupe (9) de capsule ou deux ou plusieurs pans de capsule qui dépassent depuis le côté intérieur de la capsule (1) en étant munis de moyens d'arrêt (10, 21) de la capsule, le bouchon (8) comprenant une partie (16) sensiblement tubulaire avec une partie conique (17) reliée à une partie de base (18) et munie de moyens d'arrêt du bouchon sur le côté opposé au côté se trouvant en vis-à-vis du contenu du récipient, lesdits moyens d'arret de la capsule et lesdits moyens d'arrêt du bouchon garantissant, par interaction mutuelle, une liaison captive et lâche de la capsule (1) avec le bouchon (8) et un mouvement libre dans le sens longitudinal le long de l'axe de la partie tubulaire du bouchon, caractérisé en ce que la capsule (1) et/ou le bouchon (8) est muni d'une partie (12, 22) en forme de coin, qui soit fait partie de la jupe ou des pans (20) de la capsule, soit fait partie de la partie sensiblement tubulaire du bouchon (8) ou qui comprend une jupe (12) de capsule supplémentaire ou un ensemble de deux ou plusieurs pans de capsule, ladite partie en forme de coin étant conçue pour exercer une pression sur la paroi intérieure de la partie tubulaire du bouchon garantissant une excellente étanchéité du goulot du récipient quand la capsule est totalement mise en place sur le goulot du récipient.

2. Système de fermeture et étanchéité selon la revendication 1, dans lequel les moyens d'arrêt du bouchon sont disposés sur une jupe (19) de bouchon ou deux ou plusieurs pans de bouchon dépassant de la base du bouchon (8), sur le côté opposé au côté se trouvant en vis-vis du contenu du récipient.

3. Système de fermeture et étanchéité selon la revendication 1, dans lequel les moyens d'arrêt du bouchon sont disposés sur la partie (16) sensiblement tubulaire du bouchon.

4. Système de fermeture et étanchéité selon la revendication 1, dans lequel les moyens d'arrêt de la capsule et les moyens d'arrêt du bouchon sont un système de crochets, nervures ou ardillons.

5. Système de fermeture et étanchéité selon l'une quelconque des revendications 1 à 4, dans lequel la capsule est une capsule vissée avec un filetage intérieur (9) et comporte éventuellement des moyens qui garantissent une bonne préhension pour faciliter le vissage et le dévissage.

6. Système de fermeture et étanchéité selon l'une quelconque des revendications 1 à 5, dans lequel la jupe ou les pans de la capsule et/ou les moyens d'arrêt de la capsule sont conçus pour exercer une pression de façon directe ou indirecte sur la base du bouchon (8) grâce a laquelle le bouchon est introduit dans le goulot du récipient quand la capsule (1) est mise en place sur le goulot.

7. Système de fermeture et étanchéité selon l'une quelconque des revendications 1 à 6, dans lequel la capsule (1) comprend une bague d'étanchéité (15) supplémentaire placée entre le filetage intérieur et la partie en coin ou dans laquelle la partie tubulaire (16) du bouchon (8) comprend une partie (23) formant rebord annulaire qui, lorsque la capsule (1) est totalement mise en place sur le goulot du récipient garantit une étanchéité supplémentaire.

8. Système de fermeture et étanchéité selon la revendication 1, dans lequel la capsule est en outre munie de moyens de sécurité qui sont cassés de manière irréversible quand la capsule est dévissée ou retirée pour la première fois du goulot du récipient.
